Europäisches Patentamt

European Patent Office

Office européen des brevets

(19)

(11) Numéro de publication : **0 417 179 B1**

(12)  # FASCICULE DE BREVET EUROPEEN

(45) Date de publication du fascicule du brevet :
**11.11.92 Bulletin 92/46**

(51) Int. Cl.5 : **C04B 24/14**

(21) Numéro de dépôt : **89906794.6**

(22) Date de dépôt : **29.05.89**

(86) Numéro de dépôt international :
**PCT/FR89/00258**

(87) Numéro de publication internationale :
**WO 89/12034 14.12.89 Gazette 89/29**

(54) **ADJUVANT ENTRAINEUR D'AIR CONTENANT DU PLASMA SANGUIN EN REMPLACEMENT DE COLLOIDE SYNTHETIQUE ET PRODUITS OBTENUS.**

(30) Priorité : **01.06.88 FR 8807311**

(43) Date de publication de la demande :
**20.03.91 Bulletin 91/12**

(45) Mention de la délivrance du brevet :
**11.11.92 Bulletin 92/46**

(84) Etats contractants désignés :
**AT BE CH DE FR GB IT LI LU NL SE**

(56) Documents cités :
**CH-A- 142 729**
**FR-A- 2 472 413**
**FR-A- 2 481 143**
**FR-A- 2 600 998**

(73) Titulaire : **Cazalens, Georges**
**28, rue Victor Hugo**
**F-47190 Aiguillon (FR)**

(72) Inventeur : **Cazalens, Georges**
**28, rue Victor Hugo**
**F-47190 Aiguillon (FR)**

(74) Mandataire : **Portal, Gérard et al**
**Cabinet Beau de Loménie 55, rue**
**d'Amsterdam**
**F-75008 Paris (FR)**

## Description

La présente invention concerne essentiellement un adjuvant entraîneur d'air contenant du plasma sanguin en remplacement de colloïde de synthèse et produits obtenus.

L'utilisation du sang animal et de ses extraits sous forme liquide ou en poudre, comme adjuvant entraîneur d'air dans les liants hydrauliques, pour l'obtention de mortiers et bétons, est déjà connue.

Par exemple, le document laleman FR-A-2 374 271 décrit une utilisation nouvelle du sang et des extraits de sang contenant de l'hémoglobine dans l'industrie de la construction et du bâtiment en tant qu'agents colloïdes entraîneurs d'air pour les ciments, mortiers et bétons. Cet agent colloïde entraîneur d'air est choisi parmi l'ensemble constitué par le sang animal entier, les globules, les hématies et l'hémoglobine, encore couramment dénommés le cruor, en combinaison avec au moins un autre colloïde qui est un colloïde synthétique pouvant être choisi parmi l'hydroxyéthylcellulose, l'hydroxypropylméthylcellulose et la carboxyméthylcellulose. Dans la description en page 2, ligne 35 à page 3 ligne 10 on souligne que dans le cas de l'extrait de sang animal celui-ci doit contenir de l'hémoglobine. Il s'agit donc du cruor.

Et, en page 3, lignes 1 à 3, on souligne que les globules sont un ensemble qui résulte de l'élimination du plasma. Dans les exemples du tableau page 6, on donne des rapports eau/ciment variant entre 0,42 et 0,44.

En outre, on souligne que le malaxage des divers constituants doit être réalisé au moyen d'un malaxeur travaillant entre 100 et 600 tr/min.

Le sang est habituellement utilisé ici sous forme de poudre obtenue soit par séchage, soit par lyophilisation, soit encore par application de toutes autres méthodes connues en soi (page 3, lignes 11 à 14).

Il est apparu qu'avec la combinaison de poudre de sang en tant qu'entraîneur d'air et d'un colloïde synthétique, comme préconisé dans ce document, l'air entraîné présente une faible stabilité dans les mortiers et bétons, les bulles d'air éclatant pendant la prise du ciment.

En outre, le mélange doit être effectué sous une agitation élevée avec un malaxeur travaillant entre 100 et 600 tr/min, ce qui augmente radicalement la proportion d'éclatement des bulles d'air entraînées.

Egalement, et contrairement aux valeurs 0,42 et 0,44 du rapport eau/ciment données dans ce document, il apparaît en pratique qu'il est nécessaire pour obtenir la quantité d'eau suffisante pour la prise du liant hydraulique, par exemple le ciment, d'avoir un rapport eau/ciment de l'ordre de 0,6 à 0,65 par rapport au liant hydraulique. En effet, une quantité importante de l'eau est absorbée par le colloïde synthétique.

Cet excès d'eau entraîne une augmentation importante du retrait hydraulique (environ 2 mm/m) qui se traduit par des risques accrus de fissurations après durcissement du béton.

Parallèlement, cet excès d'eau de gâchage du béton léger conduit à une diminution systématique importante des résistances mécaniques.

Enfin, en plus des inconvénients majeurs ci-dessus, l'ajout de colloïde synthétique rend délicate la mise en oeuvre du béton léger en raison de son pouvoir extrêmement collant.

De même, dans le document FR-A-2 541 991, on utilise comme adjuvant entraîneur d'air du sang liquide traité par une souche bactérienne pour éliminer le sucre, qui présente notamment l'inconvénient à l'utilisation d'une odeur nauséabonde parfois insupportable ainsi que d'un dosage important d'adjuvant.

La présente invention a ainsi pour but de résoudre le nouveau problème technique consistant en la fourniture d'un adjuvant entraîneur d'air présentant des capacités d'entraînement d'air améliorées, avec une grande stabilité des bulles d'air entraînées, et indépendamment du type de malaxage utilisé pour assurer le mélange avec les liants hydrauliques et les autres composants des mortiers et bétons légers.

La présente invention a encore pour but de résoudre le nouveau problème technique consistant en la fourniture d'un adjuvant entraîneur d'air aboutissant à une réduction effective de l'eau de gâchage conduisant à une diminution du retrait hydraulique initial et après prise, par rapport aux adjuvants d'entraînement d'air de la technique antérieure.

La présente invention a encore pour but de résoudre le nouveau problème technique consistant en la fourniture d'un adjuvant entraîneur d'air d'une extrême facilité d'utilisation dans les liants hydrauliques et dans tout type de mélange prêt à l'emploi tel qu'enduits et mortiers et bétons légers isolants, sans problème de conservation.

La présente invention a encore pour but de résoudre le nouveau problème technique consistant en la fourniture d'un agent entraîneur d'air améliorant les qualités de cohésion et d'adhérence des liants hydrauliques sur tous types de support maçonné afin de permettre une utilisation notamment comme adjuvant dans les mortiers et bétons, et enduits isolants conditionnés prêts à l'emploi.

La présente invention a encore pour but de résoudre le nouveau problème technique consistant en la fourniture d'un agent entraîneur d'air permettant de réaliser des mortiers et bétons pompables, c'est-à-dire ayant des masses volumiques comprises entre environ 300 et environ 1 700 kg/m², alors que les technologies antérieures n'ont jamais pu atteindre ces performances.

L'ensemble de ces problèmes techniques est résolu globalement pour la première fois, par la présente invention d'une manière satisfaisante, extrêmement simple, à un faible coût.

Ainsi, la présente invention, selon un premier aspect, fournit un adjuvant entraîneur d'air comprenant du sang animal entier et/ou du cruor en tant qu'agent entraîneur d'air, caractérisé en ce qu'il comprend en outre, à titre d'agent stabilisant de l'air entraîné, du plasma sanguin de préférence sous forme pulvérulente ou atomisée en une quantité suffisante pour stabiliser l'air entraîné.

Selon un mode de réalisation préféré de cet adjuvant selon l'invention, celui-ci est caractérisé en ce que le plasma sanguin remplace en totalité les colloïdes synthétiques utilisés dans la technique antérieure. Ces colloïdes synthétiques antérieurement utilisés étaient par exemple choisis parmi les hydroxypropylméthylcelluloses, les hydroxyéthylcelluloses, et les carboxyméthylcelluloses.

Selon une variante de réalisation de l'adjuvant entraîneur d'air selon l'invention, celui-ci est caractérisé en ce que le plasma sanguin est incorporé dans l'adjuvant à raison d'environ 15 à environ 25 % en poids de l'adjuvant total.

Selon une variante de réalisation avantageuse, le plasma sanguin utilisé selon l'invention contient des protéines dans les proportions en poids suivantes :
- environ 35 à 45 % d'albumines
- environ 40 à 45 % de globulines
- environ 10 à 25 % de fibrinogènes

Selon une autre variante de réalisation de l'adjuvant selon l'invention, le sang animal entier et/ou le cruor précité, sous forme pulvérulente ou atomisée constitue d'environ 30 à environ 60 % en poids de l'adjuvant total.

Selon une autre variante de réalisation de l'adjuvant selon l'invention, le plasma sanguin précité est obtenu par séparation du plasma à partir de sang entier frais, en particulier de sang entier de bovin, auquel a été additionné un anticoagulant, le plasma sanguin étant obtenu par une séparation par centrifugation, par exemple dans un appareil de centrifugation à assiette, de manière classique. Ensuite, le plasma est séché de manière à obtenir une poudre dans une tour d'atomisation dans laquelle on fait passer de l'air de séchage à une température appropriée qui n'excède pas 65°C au niveau des grains du produit, ce qui permet d'obtenir un plasma séché sous forme pulvérulente micronisée. La proportion de plasma est d'environ 60 % en volume du sang total, ce qui représente une proportion d'environ 40 % du plasma sous forme pulvérulente par rapport au sang total.

Selon une autre variante de réalisation de l'adjuvant selon l'invention, celui-ci comprend en outre un agent dispersant de préférence des argiles type bentonites, et/ou des argiles alumino magnésiennes, et/ou des dispersions de substances minérales de type silices (de 5 à 70 %) dans un milieu organique de deux types, l'un à base d'hydrocarbures contenant des émulsifiants, et/ou l'autre à base de tensioactifs non ioniques.

Une composition actuellement préférée de l'adjuvant entraîneur d'air selon l'invention est la suivante, en pourcentage en poids :

```
- sang animal entier atomisé et/ou cruor atomisé........ 30 à 60 %

- plasma sanguin atomisé................................ 15 à 25 %

- agents dispersants à base d'argiles type  bentonites et/ou  amino

  magnésiennes  et/ou  dispersions de substances  minérales  de  type

  silices  (5 à 70 %) dans un milieu organique de deux types, l'un  à base  d'hydrocarbures  contenant des émulsifiants et/ou  l'autre  à base de tensioactifs non ioniques (le solde).
```

Cet agent adjuvant entraîneur d'air selon l'invention est incorporé avantageusement sous forme de poudre dans les liants hydrauliques à raison d'environ 0,3 à environ 1 % en poids par rapport au liant hydraulique total.

Il est à souligner ici que cet adjuvant entraîneur d'air selon l'invention permet d'entraîner de 20 à 50 % d'air dans un mortier constitué d'une partie de sable 0/2 mm et d'une partie de ciment dans l'exemple type CP 55. Cet adjuvant présente donc une forte capacité d'entraînement d'air.

En outre, et grâce à la présence de plasma sanguin, il y a un effet de synergie avec le sang animal entier ou des extraits, les globules de celui-ci, sous forme de cruor. Les bulles d'air entraînées sont très stables, ce qui permet de réaliser le mélange des divers composants de la composition de liant hydraulique et des autres composants habituels des mortiers et bétons à l'aide de tout type de malaxeur connu, qu'il soit vertical, horizontal, qu'il soit formé par une toupie bétonnière, et surtout sans avoir recours à une agitation mécanique importante, contrairement aux adjuvants antérieurs. Selon l'invention, la vitesse de rotation des malaxeurs classiques tels que bétonnières peut être de quelques tours par minute alors qu'avec les adjuvants antérieurement connus, la vitesse de rotation du malaxeur était comprise entre 100 et 600 tr/min, ce qui conduisait notamment à une destruction importante des bulles d'air entraînées.

En outre, l'adjuvant selon l'invention est compatible avec tous les ciments et liants hydrauliques connus, et il s'incorpore dans les mortiers et bétons légers et allégés qui comportent des granulats légers tels que billes de verre expansé, argile expansée, schiste expansé, perles de polystyrène, liège, vermiculite, perlite, pierre ponce, etc.

Enfin, l'adjuvant selon l'invention permet de pomper tous les mortiers et bétons légers à partir de 300 kg/m³.

On obtient également une augmentation des résistances mécaniques en raison de la diminution réelle de l'eau de gâchage, le rapport eau/liant hydraulique étant inférieur à 0,45 et avantageusement voisin de 0,40, contrairement aux adjuvants antérieurs qui nécessitent un rapport eau/ciment en pratique compris entre 0,60 et 0,65 pour obtenir une hydratation complète du liant hydraulique.

D'autres buts, caractéristiques et avantages de l'invention apparaîtront clairement à la lumière de la description explicative qui va suivre, faite en référence à l'exemple unique suivant, donné simplement à titre d'illustration, et qui ne saurait donc en aucune façon limiter la portée de l'invention.

Exemple

On peut préparer un béton léger isolant à partir de la composition suivante permettant d'obtenir un mètre cube de béton léger de masse volumique environ égale à 600 kg/m³ :

```
- ciment classe CPA 55........................  350  kg
- sable de seine 0/3 mm.......................  160  kg
- adjuvant selon l'invention à 0,4%/ciment....   1,4 kg
- perles de polystyrène.......................  660 litres
- eau de prise................................  140 litres
```

On mélange cette composition dans une bétonnière classique à une vitesse de rotation nettement inférieure à 100 tr/min, par exemple d'environ 30 tr/min.

Par exemple, on peut utiliser comme adjuvant particulier l'adjuvant entraîneur d'air selon l'invention ayant la composition suivante, en pourcentage en poids :

```
- sang animal entier atomisé.................. 45
- plasma sanguin atomisé...................... 20
- bentonite et/ou argiles alumino magnésiennes et/ou dispersion  en
poudre  d'une substance minérale de type silice (5 à 70 %) dans  un
milieu  organique de deux types l'un à base d'hydrocarbures  conte-
nant  des émulsifiants l'autre à base de tensioactifs non  ioniques
solde soit 35 %.
```

En utilisant cet adjuvant entraîneur d'air selon l'invention incorporé dans la composition de béton léger ci-dessus, on obtient, après durcissement du béton, les caractéristiques suivantes :
- résistance en compression sur cube de 10 cm de côté : 3,7 MPa
- retrait : 830 µm/m
- entraînement d'air : 25 à 35 % en volume
- rapport eau/ciment environ 0,40

On constate ainsi que l'on obtient une résistance en compression à 28 j très élevée, ainsi qu'un entraînement d'air exceptionnel avec une grande stabilité.

Ceci est dû à l'emploi du plasma sanguin comme agent stabiliseur des bulles d'air entraînées, combiné avec du sang entier animal ou du cruor utilisé à titre d'agent entraîneur d'air.

On comprend que l'invention peut faire l'objet de diverses variantes de réalisation sans sortir de son cadre général.

L'invention couvre également l'utilisation de l'adjuvant entraîneur d'air comme adjuvant plastifiant et réducteur d'eau et effet secondaire fluidifiant des mortiers et bétons, ainsi que les produits obtenus tels que les bétons légers et allégés, les mortiers et enduits légers isolants pour améliorer l'isolation thermique et phonique des bâtiments caractérisés en ce qu'ils sont fabriqués ou préfabriqués en employant l'adjuvant entraîneur d'air selon l'invention.

Enfin, selon une variante de réalisation avantageuse de l'invention, on règle la proportion d'entraînement d'air par ajout d'une quantité déterminée correspondante d'agent antimousse. Cet agent antimousse, choisi parmi tout agent antimousse bien connu de l'homme de l'art, doit être compatible avec le ciment.

On peut citer par exemple les alkylpolyalkyloxyéthers, les triisobutylphosphates ou les esters de phosphates d'alcools gras, cette liste n'étant pas limitative.

## Revendications

1. Adjuvant entraîneur d'air notamment utilisable dans l'industrie du bâtiment et des travaux publics pour la fabrication et la préfabrication de bétons légers et allégés ainsi que des mortiers et enduits isolants, comprenant du sang entier animal et/ou du cruor à titre d'agent entraîneur d'air proprement dit, caractérisé en ce qu'il comprend en outre, à titre d'agent stabilisant de l'air entraîné, du plasma sanguin, de préférence sous forme pulvérulente ou atomisée, en une quantité suffisante pour stabiliser l'air entraîné.

2. Adjuvant entraîneur d'air selon la revendication 1, caractérisé en ce que le plasma sanguin précité remplace totalement les colloïdes synthétiques.

3. Adjuvant selon la revendication 1 ou 2, caractérisé en ce que le plasma sanguin précité s'incorpore dans l'adjuvant à raison d'environ 15 à environ 25 % en poids de l'adjuvant total.

4. Adjuvant selon l'une des revendications 1 à 3, caractérisé en ce que le plasma sanguin, sous forme pulvérulente ou atomisée contient des protéines dans les proportions en poids suivantes :
   - 35 à 40 % d'albumines
   - 40 à 45 % de globulines
   - 10 à 25 % de fibrinogènes

5. Adjuvant selon l'une des revendications 1 à 5, caractérisé en ce que le sang animal entier et/ou le cruor, sous forme pulvérulente ou atomisée constitue de 30 à 60 % de la formule pondérale de l'adjuvant.

6. Adjuvant selon l'une des revendications 1 à 5, caractérisé en ce qu'il comprend en outre un agent dispersant, de préférence des argiles type bentonites, et/ou des argiles alumino magnésiennes, et/ou des dispersions de substances minérales de type silices (de 5 à 70 %) dans un milieu organique de deux types, l'un à base d'hydrocarbures contenant des émulsifiants, et/ou l'autre à base de tensioactifs non ioniques (le solde).

7. Adjuvant selon la revendication 6, caractérisé en ce qu'il présente la composition suivante en pourcentage en poids :

```
- sang entier et/ou cruor.................................... 30 à 60
- plasma sanguin ........................................... 15 à 25
- agents  dispersants à base d'argiles type  bentonites et/ou  alu-
mino magnésiennes et/ou dispersions de substances minérales de type
silices  (5 à 70 %) dans un milieu organique de deux types, l'un  à
base  d'hydrocarbures  contenant des émulsifiants et/ou  l'autre  à
base de tensioactifs non ioniques (le solde).
```

8. Adjuvant selon l'une quelconque des revendications 1 à 7, caractérisé en ce qu'il est incorporé dans les liants hydrauliques à raison d'environ 0,3 à environ 1 % en poids par rapport au poids du liant hydraulique.

9.  Adjuvant selon l'une quelconque des revendications 1 à 8, caractérisé en ce que le plasma sanguin est sous forme pulvérulente micronisèe obtenu par séchage de plasma sanguin à une température appropriée qui n'excède pas 65°C au niveau des grains du produit.

10. Adjuvant selon l'une quelconque des revendications 1 à 9, caractérisé en ce qu'il contient un agent antimousse comme agent de réglage de la proportion d'air entraîné, particulièrement choisi parmi les alkylpolyalkyloxyéthers, les triisobutylphosphates ou les esters de phosphates d'alcools gras.

11. Produits tels que bétons légers et allégés, mortiers et enduits légers isolants pour améliorer l'isolation thermique et phonique des bâtiments, caractérisés en ce qu'ils sont fabriqués ou préfabriqués avec l'emploi d'un adjuvant entraîneur d'air selon l'une quelconque des revendications 1 à 10.

## Claims

1.  Air-entraining adjuvant which can be used especially in the building and public works industry for the manufacture and prefabrication of lightweight and superlight concretes as well as insulating mortars and coatings, comprising animal whole blood and/or cruor as the actual air-entraining agent, characterized in that it further comprises, as a stabilizer for the entrained air, blood plasma, preferably in pulverulent or atomized form, in an amount sufficient to stabilize the entrained air.

2.  Air-entraining adjuvant according to claim 1, characterized in that said blood plasma totally replaces synthetic colloids.

3.  Adjuvant according to claim 1 or 2, characterized in that said blood plasma is incorporated into the adjuvant at a rate of about 15 to about 25% by weight of the total adjuvant.

4.  Adjuvant according to one of claims 1 to 3, characterized in that the blood plasma, in pulverulent or atomized form, contains proteins in the following proportions by weight:
    - 35 to 40% of albumins
    - 40 to 45% of globulins
    - 10 to 25% of fibrinogens

5.  Adjuvant according to one of claims 1 to 5, characterized in that the animal whole blood and/or cruor, in pulverulent or atomized form, represents from 30 to 60% by weight of the formulation of the adjuvant.

6.  Adjuvant according to one of claims 1 to 5, characterized in that it further comprises a dispersant, preferably clays of the bentonite type and/or aluminomagnesium clays and/or dispersions of mineral substances of the silica type (from 5 to 70%) in one or both of two types of organic medium, one being based on hydrocarbons containing emulsifiers and the other being based on non-ionic surfactants (the remainder).

7.  Adjuvant according to claim 6, characterized in that it has the following composition in percentages by weight:

```
- whole blood and/or cruor..................... 30 to 60
- blood plasma................................. 15 to 25
- aluminomagnesium  clays and/or dispersions of  mineral
  substances  of  the silica type (5 to 70%) in  one  or
  both  of two types of organic medium, one being  based
  on  hydrocarbons containing emulsifiers and the  other
  being based on non-ionic surfactants (the remainder).
```

8.  Adjuvant according to any one of claims 1 to 7, characterized in that it is incorporated into the hydraulic binders at a rate of about 0.3 to about 1% by weight, relative to the weight of the hydraulic binder.

9. Adjuvant according to any one of claims 1 to 8, characterized in that the blood plasma is in a micronized pulverulent form obtained by drying blood plasma at an appropriate temperature not exceeding 65°C at the level of the particles of product.

10. Adjuvant according to any one of claims 1 to 9, characterized in that it comprises an anti-foaming agent as setting agent to set the proportion of entrained air, in particular selected from alkylpolyalkyl-oxyethers, triisobutylphosphates or the phosphate esters of fat alcohols.

11. Products such as lightweight and super-light concretes and insulating lightweight mortars and coatings for improving the heat and sound insulation of buildings, the said products being manufactured or prefabricated using an air-entraining adjuvant according to any one of claims 1 to 10.

**Patentansprüche**

1. Luftporen bildender Hilfsstoff, insbesondere verwendbar in der Bauindustrie sowie der Industrie der öffentlichen Arbeiten für die Herstellung und Vorfertigung von Leicht- und leichtgemachtem Beton sowie von Mörtel und Isolierverkleidungen, enthaltend tierisches Vollblut und bzw. oder Blutkuchen in der Eigenschaft des eigentlichen Luftporenbildners, **dadurch gekennzeichnet, daß** er außerdem als Mittel zum Stabilisieren der Luftporen Blutplasma, vorzugsweise pulverförmig oder zerstäubt, in einer zur Stabilisie±ung der Luftporen ausreichenden Menge enthält.

2. Luftporen bildender Hilfsstoff gemäß Anspruch 1, **dadurch gekennzeichnet, daß** das Blutplasma synthetische Kolloide vollständig ersetzt.

3. Hilfsstoff gemäß Anspruch 1 oder 2, **dadurch gekennzeichnet, daß** das Blutplasma in dem Hilfsstoff in einer Menge von etwa 15 bis etwa 25 %, bezogen auf das Gesamtgewicht des Hilfsstoffs, enthalten ist.

4. Hilfsstoff gemäß einem der Ansprüche 1 bis 3, **dadurch gekennzeichnet, daß** das pulverförmig oder zerstäubte Blutplasma Proteine in den folgenden Gewichtsverhältnissen enthält:
   - 35 bis 40 % Albumine
   - 40 bis 45 % Globuline
   - 10 bis 25 % Fibrinogene.

5. Hilfsstoff gemäß einem der Ansprüche 1 bis 5, **dadurch gekennzeichnet, daß** das tierische Vollblut und bzw. der Blutkuchen in pulverförmiger oder zerstäubter Form 30 bis 60 Gew.-% der Hilfsstoff-Formulierung ausmacht.

6. Hilfsstoff gemäß einem der Ansprüche 1 bis 5, **dadurch gekennzeichnet, daß** er außerdem ein Dispergiermittel enthält, vorzugsweise Tone vom Bentonit-Typ und bzw. oder Aluminium/Magnesium-Tone und bzw. oder Dispersionen von mineralischen Substanzen vom Kieselerde-Typ (5 bis 70 %) in einem organischen Milieu, das aus zwei Typen bestehen kann, von denen der eine auf Kohlenwasserstoffen mit einem Gehalt an Emulgatoren und der andere auf nichtionischen oberflächenaktiven Mitteln beruht (Rest).

7. Hilfsstoff gemäß Anspruch 6, **dadurch gekennzeichnet, daß** er die folgende Zusammensetzung (in Gew.-%) besitzt:

– Vollblut und bzw. oder Blutkuchen ........ 30 bis 60

– Blutplasma .............................. 15 bis 25

– Dispergiermittel auf der Grundlage von Tonen vom Bentonit-Typ und bzw. oder Aluminium/Magnesium-Tonen und bzw. oder Dispersionen von mineralischen Substanzen vom Kieselerde-Typ (5 bis 70 %) in einem organischen Milieu, das aus zwei Typen bestehen kann, von denen der eine auf Kohlenwasserstoffen mit einem Gehalt an Emulgatoren und der andere auf nichtionischen oberflächenaktiven Mitteln beruht (Rest).

8. Hilfsstoff gemäß einem der Ansprüche 1 bis 7, **dadurch gekennzeichnet, daß** er in die hydraulischen Bindemittel in einem Verhältnis von ungefähr 0,3 bis ungefähr 1 %, bezogen auf das Gewicht des hydraulischen Bindemittels, eingearbeitet ist.

9. Hilfsstoff gemäß einem der Ansprüche 1 bis 8, **dadurch gekennzeichnet, daß** das Blutplasma pulverförmig und feinstvermahlen durch Trocknen von Blutplasma bei einer geeigneten Temperatur von nicht über 65°C bis zu einem körnigen Produkt erhalten worden ist.

10. Hilfsstoff gemäß einem der Ansprüche 1 bis 9, **dadurch gekennzeichnet, daß** er ein Antischaummmittel als Mittel zum Steuern der Menge an Luftporen enthält, das insbesondere aus der Gruppe der Alkylpolyalkyloxyether, der Triisobutylphosphate und der Fettalkoholphosphatester ausgewählt ist.

11. Produkte wie Leicht- und leichtgemachter Beton, Mörtel und leichte Isolierverkleidungen zum Verbessern der Wärme- und Schallisolierung von Bauten, **dadurch gekennzeichnet, daß** sie unter Verwendung eines Luftporen bildenden Hilfsstoffs gemäß einem der Ansprüche 1 bis 10 hergestellt oder vorgefertigt sind.